(19) Europäisches Patentamt
European Patent Office
Office européen des brevets

(11) **EP 4 641 505 A1**

(12) **DEMANDE DE BREVET EUROPEEN**

(43) Date de publication:
**29.10.2025 Bulletin 2025/44**

(51) Classification Internationale des Brevets (IPC):
***G06T 11/00*** *(2006.01)*

(21) Numéro de dépôt: **25162470.6**

(52) Classification Coopérative des Brevets (CPC):
**G06T 11/006;** G06T 2211/424

(22) Date de dépôt: **08.03.2025**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **09.03.2024 FR 2402380**

(71) Demandeur: **Commissariat à l'Energie Atomique et aux Energies Alternatives
75015 Paris (FR)**

(72) Inventeurs:
• **HERVE, Lionel
38054 GRENOBLE CEDEX 09 (FR)**
• **BONNET, Stéphane
38054 GRENOBLE CEDEX 09 (FR)**

(74) Mandataire: **INNOV-GROUP
209 Avenue Berthelot
69007 Lyon (FR)**

(54) **PROCÉDÉ DE RECONSTRUCTION D'UNE DISTRIBUTION SPATIALE D'UNE CARACTÉRISTIQUE D'UN OBJET**

(57) Procédé de reconstruction d'une distribution spatiale d'une caractéristique ($F$) dans un objet, comportant :

a) acquisition de mesures ($M$) par un capteur (15), chaque mesure pouvant être estimée un opérateur ($H$ ($F$), $P * F$, $\mathcal{R}$ ($F$)) linéaire, appliqué à la distribution spatiale de la caractéristique (F), formant un modèle direct ;

b) à l'aide d'une unité de traitement (20), reconstruction de la distribution spatiale de la caractéristique de l'objet, par minimisation itérative d'une erreur, chaque itération comportant une mise à jour de la distribution spatiale de la caractéristique de l'objet ;

le procédé étant caractérisé en ce que lors de l'étape b), l'erreur minimisée comporte :

- une composante d'attache aux données ($\varepsilon_D(f)$, $\varepsilon_D(F)$) comportant un écart entre les mesures acquises et les mesures estimées par le modèle direct ;

- une composante de régularisation ($\varepsilon_R(f)$, $\varepsilon_R(F)$), comportant une somme d'une norme d'un gradient spatial de la caractéristique, déterminé en différentes coordonnées dans l'objet.

**Fig. 1**

EP 4 641 505 A1

**Description**

## DOMAINE TECHNIQUE

Le domaine technique de l'invention est la reconstruction d'une caractéristique d'un objet à partir de mesures non destructives réalisées face à cet objet.

## ART ANTERIEUR

L'imagerie de fluorescence est une technique permettant de localiser des marqueurs fluorescents dans un corps humain ou animal. Une des principales applications est la localisation de marqueurs fluorescents, ou fluorophores, ces derniers ciblant des cellules d'intérêt, par exemple des cellules cancéreuses. Le protocole consiste à injecter ces marqueurs dans l'organisme avant un examen par imagerie de fluorescence, au cours duquel des images de fluorescence sont formées. Un algorithme de reconstruction est ensuite mis en œuvre, de façon à déterminer la position des fluorophores dans l'objet examiné. Cet algorithme permet d'obtenir une carte de fluorescence, dont chaque terme correspond à une intensité de fluorescence en différentes positions dans l'objet examiné. Une particularité de la reconstruction est que la carte de fluorescence comporte des termes positifs ou nuls.

Des algorithmes de reconstruction ont été décrits, par exemple dans WO2010103026.

Dans des domaines différents de l'imagerie de fluorescence, d'autres algorithmes de reconstruction sous contrainte de positivité ont été décrits dans les publications Daube-Witherspoon M « An iterative image space reconstruction algorithm suitable for volume ect ». IEEE transactions on medical imaging 5(2) :61-66, 1986, ou dans D. Seung and L. Lee "Algorithms for non negative matrix factorization". Advances in neural information processing systems" 13 ; 556-562, 2001.

Dans le domaine de la reconstruction d'image, US2021074036 décrit un procédé de reconstruction d'image à partir d'un décodeur/encodeur formé de couches convolutives. Cela est présenté comme plus rapide et moins contraignant qu'une minimisation d'erreur de type attache aux données ou régularisation.

La publication Hui Meng et al « Adaptive gaussian weighted Laplace prior regularization enables accurate morphological reconstruction in fluorescence molecular tomography", IEEE transactions on medical imaging, IEEE, USA, vol. 38, n° 12, 01/12/2019, décrit une reconstruction d'une image de fluorescence basée sur une minimisation d'une erreur comportant un terme d'attache au données et un terme de régularisation. On note que le terme de régularisation est basé sur un noyau gaussien variable en fonction de l'intensité des voxels.

La publication Miqueles E. et al "Iterative reconstruction in X ray Fluorescence tomography based on radon inversion" IEEE transactions on medical imaging, IEEE, USA, vol. 30, n° 2, 01/02/2011, décrit un algorithme de reconstruction itératif pour la tomographie de fluorescence X.

Les inventeurs proposent un algorithme de reconstruction d'une distribution spatiale d'une caractéristique d'un objet, permettant d'obtenir un résultat proche de la réalité physique dans l'objet, tout en étant peu consommateur de mémoire lors de sa mise en œuvre. L'algorithme peut s'appliquer à l'imagerie de fluorescence, mais également à d'autres modalités d'analyse comme la déconvolution d'images.

## EXPOSE DE L'INVENTION

Un premier objet de l'invention est un procédé de reconstruction d'une distribution spatiale d'une caractéristique dans un objet, l'objet étant discrétisé selon différentes coordonnées spatiales définies dans un repère, le repère étant défini selon au moins un axe le procédé comportant :

a) acquisition de mesures par un capteur disposé face à l'objet, chaque mesure pouvant être estimée par un opérateur linéaire, appliqué à la distribution spatiale de la caractéristique, formant un modèle direct ;

b) à l'aide d'une unité de traitement, reconstruction de la distribution spatiale de la caractéristique de l'objet, en chaque coordonnée spatiale, par minimisation itérative d'une erreur, à chaque itération étant assigné un rang, chaque itération comportant une mise à jour de la distribution spatiale de la caractéristique de l'objet, la première itération étant mise en œuvre à partir d'une distribution spatiale initialisée ,

le procédé étant caractérisé en ce que, lors de l'étape b), l'erreur minimisée comporte :

- une composante d'attache aux données, comportant un écart entre les mesures acquises et les mesures estimées par le modèle direct ;
- une composante de régularisation, comportant une somme d'une norme d'un gradient spatial de la caractéristique, déterminé en différentes coordonnées dans l'objet ;

et en ce que chaque itération comporte une mise à jour d'une distribution spatiale antérieure, correspondant soit à la distribution spatiale initiale soit à une distribution spatiale résultant d'une itération précédente, la mise à jour comportant un produit pour chaque coordonnée spatiale, de

- la distribution spatiale antérieure;
- l'opérateur adjoint du modèle direct appliqué aux mesures acquises;
- pour au moins un axe du repère, un produit, terme à terme :

  • de ladite distribution spatiale antérieure translatée, selon l'axe du repère, d'au moins une unité, selon un sens croissant ;
  • de ladite distribution spatiale antérieure translatée, selon l'axe du repère, d'au moins une unité, selon un sens décroissant.

La mise à jour peut comporter, en chaque coordonnée spatiale, une multiplication de la distribution spatiale antérieure par une combinaison linéaire de produits, chaque produit étant associé à un axe du repère, et comportant une multiplication terme à terme :

• de ladite distribution spatiale antérieure translatée, selon l'axe du repère, d'au moins une unité, selon un sens croissant ;
• de ladite distribution spatiale antérieure translatée, selon l'axe du repère, d'au moins une unité, selon un sens décroissant.

Chaque multiplication terme à terme comprendre l'inverse d'une norme du gradient spatial de la distribution antérieure pour ladite coordonnée.

La mise à jour peut comprendre :

$$F^{k-1} \odot \frac{Q^-(F^{k-1}) + H'(M)}{Q^+(F^{k-1})}$$

où :

$$Q^+(F^{k-1}) = H'(H(F^{k-1})) + \lambda\left[n\Gamma' \odot F^{k-1} + \sum_\Delta S_{\Delta\to}[\Gamma' \odot S_{\leftarrow\Delta}F^{k-1}]\;\right];$$

$$Q^-(F^{k-1}) = \lambda[\Gamma' \odot \sum_\Delta S_{\leftarrow\Delta}F^{k-1} + \sum_\Delta S_{\Delta\to}[\Gamma' \odot F^{k-1}]];$$

- M correspond aux mesures effectuées ;
- $F^{k-1}$ est la distribution spatiale antérieure ;
- $\Gamma'$ est une distribution spatiale de l'inverse d'une norme d'un gradient spatial de la distribution spatiale antérieure, en chaque coordonnée de l'objet ;
- $\Delta$ correspond à chaque axe du repère ;
- $S_{\leftarrow\Delta}$ est un opérateur décalage d'une ou plusieurs unités selon l'axe $\Delta$, dans le sens décroissant ;
- $S_{\Delta\to}$ est un opérateur décalage d'une ou plusieurs unités selon l'axe $\Delta$, dans le sens croissant ;
- n correspond au nombre d'axes considérés ;
- $\lambda$ est un réel positif ;
- H est l'opérateur du modèle direct ;
- H' est l'opérateur adjoint du modèle direct ;
- $\odot$ désigne le produit de Hadamard.

L'étape a) peut comporter une formation d'au moins une image de l'objet, chaque image formant une distribution spatiale de mesures acquises par le capteur.

Selon une possibilité :

- le capteur est un capteur d'image, configuré pour former une image de l'objet à une longueur d'onde d'émission ;
- l'objet est susceptible de comporter un fluorophore, émettant une lumière, à la longueur d'onde d'émission, sous l'effet d'une illumination à une longueur d'onde d'excitation ;
- dans l'étape a), au moins une image de l'objet est acquise lorsque l'objet est illuminé à la longueur d'onde d'excitation, différente de la longueur d'onde d'émission, chaque mesure étant représentative d'une quantité de lumière émise par le fluorophore en différentes coordonnées dans l'objet.

Selon une possibilité :

- le capteur est un capteur d'image, configuré pour former une image de l'objet à une longueur d'onde d'émission ;
- l'objet est susceptible d'absorber une lumière, à la longueur d'onde d'émission,
- dans l'étape a), au moins une image de l'objet est acquise lorsque l'objet est illuminé à la longueur d'onde d'émission, chaque mesure étant représentative d'une quantité de lumière absorbée en différentes coordonnées dans l'objet.

Selon une possibilité :

- le capteur est un capteur destiné à détecter un rayon ionisant, de type X ou gamma ;
- dans l'étape a), l'objet est irradié par un faisceau d'irradiation X ou gamma, chaque mesure étant représentative d'une absorption du faisceau par l'objet.

Le modèle direct peut comporter une transformée de Radon.
La caractéristique peut être une caractéristique d'émission ou de réflexion ou de rétrodiffusion d'une onde électromagnétique ou d'une onde acoustique.
Un deuxième objet de l'invention est une unité de traitement, configurée pour mettre en œuvre l'étape b) d'un procédé selon le premier objet de l'invention à partir de mesures réalisées par un capteur disposé face à un objet, de façon à obtenir une distribution spatiale d'une caractéristique de l'objet.
Un troisième objet de l'invention est un système de mesures, configuré pour reconstruire une distribution spatiale d'une caractéristique d'un objet, l'objet étant discrétisé selon différentes coordonnées spatiales associées à un repère, et comportant :

- un capteur, disposé face à l'objet, et configuré pour acquérir des mesures, chaque mesure pouvant être estimée un opérateur linéaire, appliqué à la distribution spatiale de la caractéristique, formant un modèle direct ;
- une unité de traitement, configurée pour mettre en œuvre l'étape b) d'un procédé selon le premier objet de l'invention.

L'invention sera mieux comprise à la lecture de l'exposé des exemples de réalisation présentés, dans la suite de la description, en lien avec les figures listées ci-dessous.

## FIGURES

La figure 1 schématise un dispositif permettant une mise en œuvre de l'invention, de façon à reconstruire une carte de fluorescence d'un objet.

La figure 2 illustre une réponse impulsionnelle du capteur décrit en lien avec le dispositif de la figure 1.

La figure 3 schématise une acquisition des images par le dispositif décrit en lien avec la figure 1.

La figure 4 illustre le principe d'une minoration de la majoration.

La figure 5 schématise les principales étapes d'un procédé selon l'invention.

Les figures 6A à 6D sont des images résultant d'une reconstruction d'une carte de fluorescence d'un embryon de souris.

## EXPOSE DE MODES DE REALISATION PARTICULIERS

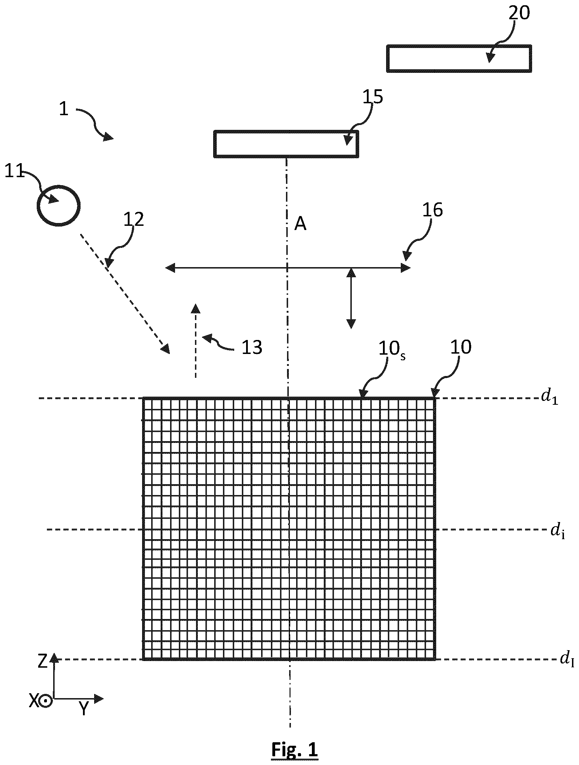

La figure 1 représente un dispositif permettant une mise en œuvre de l'invention. Dans cet exemple, le dispositif est configuré pour acquérir des images d'un échantillon, de façon à localiser des sources de lumière de fluorescence dans l'objet. Il s'agit d'une des modalités d'analyse pouvant mettre en œuvre la méthode. D'autres modalités possibles sont décrites par la suite, par exemple une radiographie X ou une tomographie X, ou une reconstruction de zones absorbant la lumière dans un échantillon.

Le dispositif comporte une source de lumière 11, configurée pour illuminer un échantillon 10. L'échantillon est un volume solide que l'on souhaite analyser. Sous l'effet de l'illumination par la source de lumière, l'échantillon émet une lumière d'émission. La source de lumière émet une lumière d'illumination 12 dans un bande spectrale d'illumination. Une partie de la lumière émise par la source de lumière se propage à travers l'échantillon. Sous l'effet de l'illumination, l'échantillon émet une lumière de fluorescence 13 dans une bande spectrale d'émission.

La source de lumière peut être une source laser ou une diode électroluminescente. La source de lumière peut être fibrée, la lumière émise par la source de lumière étant guidée vers l'échantillon avec une fibre optique.

L'échantillon comporte des fluorophores, émettant la lumière de fluorescence, dans la bande spectrale d'émission, lorsqu'ils sont illuminés dans une bande spectrale d'excitation. On cherche à déterminer la position des fluorophores dans l'échantillon. Il s'agit de reconstruire une distribution spatiale tridimensionnelle d'émission de la lumière à l'intérieur de l'échantillon. Cela permet d'identifier les zones de l'échantillon présentant une concentration élevée de fluorophores.

L'échantillon est par exemple un tissu biologique, que l'on souhaite analyser afin d'identifier d'éventuelles singularités. L'objectif est d'identifier des concentrations locales de fluorophores dans l'échantillon, ces dernières pouvant être utilisées pour aider à la détermination d'un état pathologique.

L'échantillon 10 est discrétisé en voxels, dits « voxels objet ». Chaque voxel objet correspond à un volume élémentaire de l'échantillon. Il peut par exemple s'agir d'un volume de 100 nm x 100 nm x 100 nm à 10 $\mu$m x 10 $\mu$m x 10 $\mu$m. Dans la suite, chaque voxel objet est identifié par une coordonnée spatiale tridimensionnelle r définie dans un repère XYZ. $N$ correspond au nombre total de voxels objet discrétisant l'objet.

Le dispositif comporte un capteur d'image pixelisé 15, configuré pour former une image de l'échantillon. Le capteur d'image 15 est couplé à un système optique 16, ce dernier permettant de conjuguer un plan objet, dit plan focal, avec le capteur d'image. Le capteur d'image et le système optique sont alignés selon un axe optique A. L'ensemble formé par le capteur d'image et le système optique est configuré de façon que le plan focal puisse être translaté parallèlement à l'axe optique A. Le système optique peut combiner un objectif et une lentille de tube. Le capteur d'image peut être un capteur de type CMOS. Le plan focal peut ainsi être translaté selon différentes profondeurs à l'intérieur de l'échantillon.

De façon alternative, le capteur d'image est associé à un diaphragme confocal, ce dernier permettant l'observation successive de différentes tranches de l'échantillon.

D'une façon générale, le capteur d'image est configuré pour acquérir des images dans différents plans, s'étendant à différentes profondeurs dans l'échantillon. L'échantillon est délimité par une surface S, formant une interface entre l'échantillon et un milieu ambiant dans lequel s'étend le capteur d'image. Le milieu ambiant est généralement de l'air. Une profondeur dans l'échantillon correspond à une distance par rapport à la surface S, parallèlement à l'axe optique A. Le capteur d'image peut être couplé à un filtre spectral, par exemple de type passe-bande, de façon à détecter une onde lumineuse dans la bande spectrale d'émission.

Le dispositif comporte une unité de traitement 20, agencée pour traiter les images formées par le capteur d'image, de façon à estimer la distribution spatiale, tridimensionnelle, d'émission de lumière de fluorescence dans l'échantillon.

On peut relier la distribution spatiale d'émission de fluorescence F au modèle de mesures en se basant sur un modèle additif de bruit :

$$M = P * F + B \quad (1)$$

où :

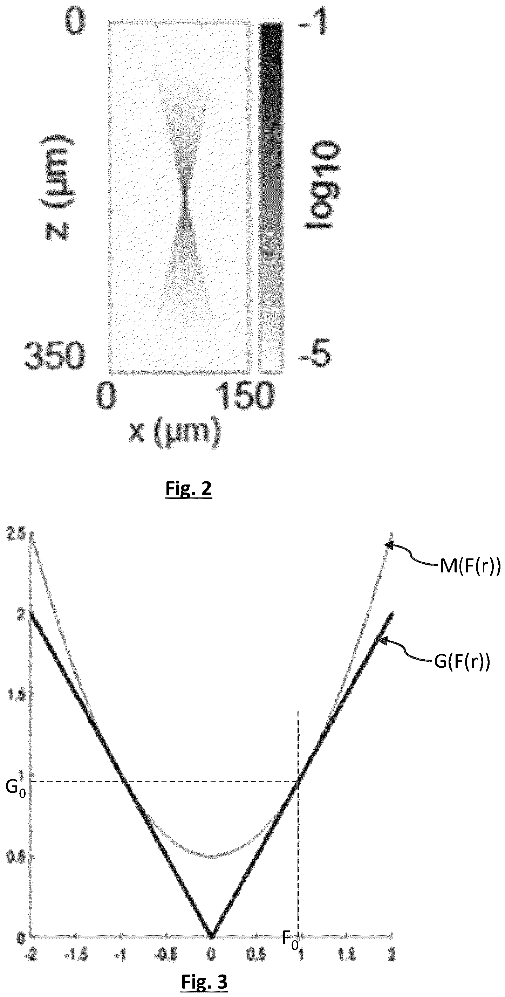

- F correspond à un tenseur 3D dont chaque terme *F(r)*, positif, est l'intensité de fluorescence dans un voxel objet de coordonnée tridimensionnelle r: cela correspond à ce que l'on cherche à estimer.
- *M* est l'ensemble des images de fluorescence formées par le capteur d'image : cela correspond à l'ensemble des mesures formant un tenseur 3D, au même pas de discrétisation que *F*. Les mesures *M(r')* sont définies en des voxels image *r'*. Le nombre de voxels image est *N' = N* ;
- *P* est un opérateur représentatif de la réponse de l'instrument : Il s'agit ici d'un tenseur 3D, représentant une réponse impulsionnelle de l'instrument de mesure (PSF : Point Spread Function). *P* est déterminé selon le même pas de discrétisation que les tenseurs *M* et *F*. La réponse impulsionnelle *P* est établie par modélisation et peut être recalée par des essais expérimentaux. L'opérateur est de dimension (*N,N'*), avec, dans cet exemple *N' = N. P* peut être obtenu par une méthode de type propagation de rayons (Beam Propagation Method), décrite dans Van Toey, J « Beam-Propagation method : analysis and assessment . La figure 2 représente la PSF du capteur d'image 15 dans un plan XZ. La valeur de la PSF, en chaque coordonnée, correspond au niveau de gris.
- * désigne l'opérateur produit de convolution 3D discret.
- *B* désigne le terme de bruit. C'est un tenseur 3-D de même dimension que *M..*

Dans cette application, à la fois la réponse de l'instrument P et l'intensité de fluorescence sont positifs. Le bruit B peut être positif et négatif mais il est faible de sorte de que la mesure M est également positive.

Les voxels images sont répartis selon un pas d'échantillonnage régulier $\Delta$x, $\Delta$y, $\Delta$z respectivement selon des axes X, Y et Z, Z correspondant à l'axe optique. Les voxels objet sont répartis selon un pas de discrétisation $\Delta$x, $\Delta$y, n$\Delta$z, où n correspond à l'indice de réfraction de l'objet, que l'on suppose homogène.

Par exemple l'échantillonnage de l'objet et des mesures peut par exemple comporter 2000 x 2000 points selon les axes X et Y et 1000 points selon l'axe Z.

Une des étapes de la reconstruction est d'obtenir une estimation des mesures $\hat{M} = P * F$ s'approchant de $M$. Il s'agit de déterminer un terme d'erreur $\varepsilon$, entre $\hat{M}$ et $M$. D'une façon plus générale, $\hat{M} = H(F)$, $H$ correspondant à l'opérateur de modèle direct, selon lequel les mesures sont estimées à partir de la distribution spatiale de la caractéristique dans l'objet.

Une première option est de minimiser une erreur $\varepsilon_D$ correspondant à une comparaison de $\hat{M}$ et de M : $\varepsilon_D(F) = \|\hat{M}(F) - M\|^2$. (1) $\varepsilon_D(F)$ correspond ici à un terme d'attache aux données. $\varepsilon_D(F)$ est un scalaire.

De préférence, les inventeurs considèrent qu'il est préférable que l'erreur combine un terme d'attache aux données et un terme de régularisation. Le terme d'attache aux données est une comparaison des mesures $M$ et de leur estimation $\hat{M}(F)$. Le terme de régularisation vise à obtenir une représentation de la distribution spatiale de fluorescence $F$ représentative de la réalité. En particulier, lorsque le terme de régularisation prend en compte un gradient spatial de l'intensité de fluorescence, en chaque voxel, , telle que

$$\sqrt{\left(\frac{\partial F(r)}{\partial x}\right)^2 + \left(\frac{\partial F(r)}{\partial y}\right)^2 + \left(\frac{\partial F(r)}{\partial z}\right)^2} \; (2)$$

Le terme de régularisation peut être une variation totale (total variation), tel que

$$\varepsilon_R(F) = TV(F) = \sum_n \sqrt{\left(\frac{\partial F(r_n)}{\partial x}\right)^2 + \left(\frac{\partial F(r_n)}{\partial y}\right)^2 + \left(\frac{\partial F(r_n)}{\partial z}\right)^2} \; (3)$$

où $r_n$ désigne la position spatiale du nième voxel. $\varepsilon_R(F)$ est un scalaire.

Le terme de régularisation correspond à une somme de la norme L2 du gradient spatial de la distribution spatiale de fluorescence définie en chaque pixel objet.

L'expression (3) correspond à une régularisation dite « total variation ». D'autres termes de régularisation sont envisageables, en particulier de la forme :

$$\sum_n \left(\sqrt{\left(\frac{\partial F(r_n)}{\partial x}\right)^2 + \left(\frac{\partial F(r_n)}{\partial y}\right)^2 + \left(\frac{\partial F(r_n)}{\partial z}\right)^2}\right)^{\alpha}$$

avec $0 < \alpha \leq 2$ (3').

Dans l'exemple qui suit, $\alpha = 1$.

L'erreur à minimiser, peut être telle que :

$$\varepsilon(F) = \varepsilon_D(F) + \lambda\varepsilon_R(F) = \left\|M - \hat{M}(F)\right\|^2 + \lambda \, TV(F) \; (4)$$

$\lambda$ est un facteur de pondération. $\lambda$ est un réel positif.

L'expression (4) comporte un terme d'attache aux données $\varepsilon_D(F) = \|M - \hat{M}(F)\|^2$ et un terme de régularisation $\varepsilon_R(F) = TV(F)$, l'équilibre entre les deux termes (attache aux données et régularisation) étant dosé par le facteur de pondération $\lambda$.

La prise en compte du terme de régularisation $\varepsilon_R$ permet de débruiter la carte de fluorescence $F$, a tendance à créer des des groupes de pixels dans lesquels $F(r)$ est homogène, les bordures des groupes de pixels étant généralement franches.

Minimisation de l'attache aux données.

$$\varepsilon_D(F) = \frac{1}{2}\,\|P * F - M\|^2 \ (5)$$

La mise sous forme canonique de (5) correspond à :

$$\varepsilon_D(F) = \frac{1}{2}\|R(P)f - m\|^2 \ (6)$$

où $R(P)f = vec(P * F)$ (7) avec l'opérateur de vectorisation *vec*, qui forme un vecteur dont chaque terme est un voxel de $P * F$

$f$ est un vecteur de dimension $N$, dont chaque terme $f(r)$ correspond à une intensité de fluorescence, supposée positive.

$R(P)$ est une matrice, de dimension $(N,N)$, représentant la convolution 3-D par la réponse impulsionnelle $P$.

$R(P)f$ est un vecteur, de dimension $N$, dont chaque terme correspond à la convolution de $F$ par $P$ pour chaque voxel image.

$$\varepsilon_D(F) = \frac{1}{2}(R(P)f - m)^T(R(P)f - m) \ (8)$$

$$\varepsilon_D(F) = \frac{1}{2}f^T R(P)^T R(P)f - \frac{1}{2}f^T R(P)^T m + \frac{1}{2}m^T m - \frac{1}{2}m^T R(P)f \ (9)$$

m est un vecteur dont chaque terme $m(r)$ correspond à une mesure.

$$\text{On pose } Q_D = R(P)^T R(P) \ (10)$$

$Q_D$ est une matrice symétrique définie semi-positive (SSPD), de dimension N x N.

D'une façon générale :

- une matrice $A$ carrée est symétrique si $A^T = A$.
- une matrice carrée $A$ est définie semi-positive si $\forall u \neq 0$, $u^T Au \geq 0$ u étant un vecteur de même taille que la matrice.

Compte tenu de (9),

$$\varepsilon_D(f) = \frac{1}{2}f^T\, Q_D f + c^T\, f + cte(11)$$

c est un vecteur de dimension N.

$$c = -R(P)^T m \ (12) \text{ car } \frac{1}{2}m^T R(P)f = \frac{1}{2}f^T R(P)^T m$$

cte est une constante qui ne dépend pas de $f : cte = \frac{1}{2}m^T m$ . (12')

La constante n'intervenant pas dans la minimisation de $\varepsilon_D(f)$, elle peut être négligée par la suite.

La matrice $Q_D$ peut être décomposée en deux matrices symétrique, d'éléments positifs, $Q_D^+$ et $Q_D^-$, chacune étant représentative des termes respectivement positifs et négatifs de la matrice $Q_D$.

$$Q_D = Q_D^+ - Q_D^- \ (13)$$

De même, le vecteur c peut être décomposé en deux vecteurs d'éléments positifs $c^+$ et $c^-$, chacun étant représentatifs des termes respectivement positifs et négatifs de $c$.

$$c = c^+ - c^- \ (14)$$

La minimisation de l'erreur d'attache aux données est effectuée de façon itérative. A chaque itération est assigné un rang *k*. Au cours de chaque itération, le vecteur *f* est mis à jour selon l'expression :

$$f^k \leftarrow f^{k-1} \odot \frac{Q_D^- f^{k-1} + c^-}{Q_D^+ f^{k-1} + c^+} \ (15)$$

Le symbole $\odot$ correspond au produit de Hadamard.

Dans cet exemple, qui concerne une déconvolution d'une mesure de fluorescence, $Q_D$ est une matrice d'éléments positifs, car $R(P)$ ne comporte que des termes positifs donc $Q_D^- = 0$ et $Q_D^+ = Q_D$

De même, c est un vecteur ne comportant que des termes négatifs (cf. (12)), donc $c^- = -c$.

L'expression (15) devient :

$$f^k \leftarrow f^{k-1} \odot \frac{c^-}{Q_D^+ f^{k-1}} \ (16)$$

L'expression (16) peut être exprimée selon :

$$F^k \leftarrow F^{k-1} \odot \frac{P_R * M}{P_R * P * F^{k-1}} \ (17)$$

$P_R$ correspond au tenseur *P* retourné, selon une symétrie centrale. Il s'agit d'un opérateur adjoint du modèle direct précédemment défini, appliqué aux mesures *M*. De façon plus générale, si *H* désigne l'opérateur correspondant au modèle direct, *H'* désigne l'opérateur adjoint. Dans cet exemple, $H(F) = P * F$. L'opérateur adjoint *H'* est tel que $H'(M) = P_R * M$ ou $H'(P * F^{k-1}) = P_R * P * F^{k-1}$.

Ainsi, (17) peut être exprimée par :

$$F^k \leftarrow F^{k-1} \odot \frac{H'(M)}{H'(P * F^{k-1})} \ (17')$$

Terme de régularisation.

Selon (3), Le terme de régularisation $\varepsilon_R$ peut être tel que :

$$\varepsilon_R(F) = TV(F) = \|G(F)\|_1 = \sum_n |G(F(r_n))|_2 =$$

$$\sum_n \sqrt{(D_X * F(r_n))^2 + (D_Y * F(r_n))^2 + (D_Z * F(r_n))^2} \ (20)$$

$D_X$ est un opérateur « dérivé selon l'axe X » ;

$D_Y$ est un opérateur « dérivé selon l'axe Y » ;

$D_Z$ est un opérateur « dérivé selon l'axe Z »

Le terme $|G(F(r))|_2 = \sqrt{(D_X * F(r))^2 + (D_Y * F(r))^2 + (D_Z * F(r))^2}$ correspond à la norme L2 du gradient spatial $G(F(r))$ de la distribution spatiale F au voxel objet r.

On peut montrer que quel que soit *F(r)*,

$$|G(F(r))|_2 \leq \frac{1}{2} \frac{|G(F(r))|_2^2}{|G(F_0)|_2} + \frac{1}{2} |G(F_0)|_2 \ (21)$$

L'expression (21) traduit le fait que $|G(F(r))|_2$ est majoré par une parabole, tangente en un point $G(F_0)$, d'équation :

$\frac{1}{2} \frac{|G(F(r))|_2^2}{|G_0|} + \frac{1}{2} |G_0|$ , avec $G_0 = G(F_0)$

On applique la méthode MM pour majoration d'un minorant : lorsqu'une fonction à valeur réelle (en l'occurrence |

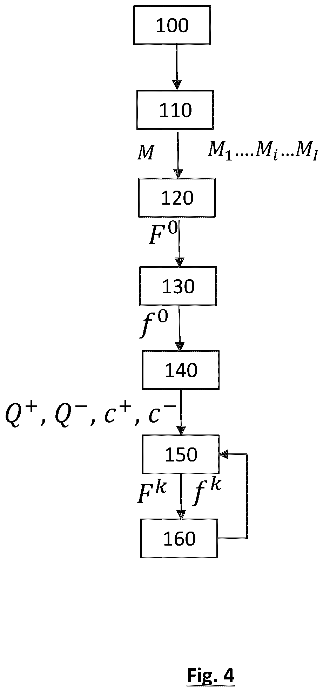

$G(F(r))|_2$), est majorée et tangente en $F_0$ par une fonction $M(F(r))$, (en l'occurrence $\frac{1}{2}\frac{|G(F(r))|_2^2}{|G_0|}+\frac{1}{2}|G_0|)$, si un point $F(r)$ diminue la valeur de $M(F(r))$ alors ce point diminue alors la valeur de $|G(F(r))|_2$. Cf. figure 4. D'une façon plus générale, si un point d'abscisse $u$ minimise $M(u)$, ce même point minimise $|G(u)|$.

La carte de fluorescence $F$ est mise à jour de façon itérative à chaque itération étant assigné un rang $k$. $k$ est un entier positif non nul. Lors de la première itération, $k = 1$. La première itération est effectuée à partir d'une carte de fluorescence initialisée $F^0$.

Par la suite, on considère que $|G_0|$ correspond à la valeur du gradient $G(F^{k-1}(r))$ lors de l'itération $k - 1$.

$$TV(F) \leq \frac{1}{2}\sum_n\left\{\frac{|G(F(r_n))|_2^2}{|G(F^{k-1}(r_n))|_2}\right\} + \frac{1}{2}\sum_n\left|G\left(F^{k-1}(r_n)\right)\right|_2 \quad (23)$$

Le terme $\frac{1}{2}\sum_n\left|G\left(F^{k-1}(r_n)\right)\right|_2$ étant constant, il ne contribue pas à la minimisation.

D'une façon générale, $\sum_n\alpha^2(r_n)\beta(r_n) = a^TBa$ (24), où

- a est un vecteur comportant les termes $\alpha(r_n)$ ;
- $B$ est une matrice diagonale formée des termes $\beta(r_1)....\beta(r_N)$ .

Le terme $\frac{1}{2}\sum_n\frac{|G(F(r_n))|_2^2}{|G(F^{k-1}(r_n))|_2}$ peut être exprimé sous forme canonique selon l'expression :

$$\frac{1}{2}f^TR^T(D_X)\Gamma R(D_X)f + \frac{1}{2}f^TR^T(D_Y)\Gamma R(D_Y)f + \frac{1}{2}f^TR^T(D_Z)\Gamma R(D_Z)f \quad (25)$$

oú

- $R(D_X),R(D_Y)$ et $R(D_Z)$ sont des représentations matricielles des convolutions respectives par $D_X,D_Y$ et $D_Z$.
- $\Gamma$ est une matrice diagonale de dimension $N \times N$ d'éléments $|G |F^{k-1}(r_n)|_2$

Ce qui revient à

$$\Gamma = \begin{bmatrix} 1/\left|G\left(F^{k-1}(r_1)\right)\right|_2 & \cdots & 0 \\ \vdots & \ddots & \vdots \\ 0 & \cdots & 1/\left|G\left(F^{k-1}(r_N)\right)\right|_2 \end{bmatrix}(27)$$

Chaque terme de la diagonale de $\Gamma$ est l'inverse d'une norme L1 d'un gradient spatial de à chaque coordonnée $r_n$.

Critère Global

Compte tenu de (4), (9) et (25), on peut écrire :

$$\varepsilon(f) = \varepsilon_D(f) + \lambda\varepsilon_R(f) \leq \frac{1}{2}f^TR(P)^TR(P)f - m^TR(P)f + \lambda\left[\frac{1}{2}f^TR^T(D_X)\Gamma R(D_X)f + \frac{1}{2}f^TR^T(D_Y)\Gamma R(D_Y)f + \frac{1}{2}f^TR^T(D_Z)\Gamma R(D_Z)f\right] \quad (30)$$

On pose à présent

$$Q = R(P)^TR(P) + \lambda[R^T(D_X)\Gamma R(D_X) + R^T(D_Y)\Gamma R(D_Y) + R^T(D_Z)\Gamma R(D_Z)] \quad (31)$$

$$Q = Q_D + \lambda[Q_X + Q_Y + Q_Z] \ (32)$$

$$Q_X = R^T(D_X)\,\Gamma R(D_X) \ (33)$$

$$Q_Y = R^T(D_Y)\,\Gamma R(D_Y) \ (34)$$

$$Q_Z = R^T(D_Z)\,\Gamma R(D_Z) \ (35)$$

Or, dans le cas où on choisit la dérivée vers l'avant,

$$R(D_X) = \begin{bmatrix} 1 & -1 & & & \\ 0 & 1 & \ddots & & \\ & 0 & \ddots & -1 & \\ & & \ddots & 1 & -1 \\ & & & 0 & 1 \end{bmatrix} \ (36)$$

et

$$R(D_X)^T = \begin{bmatrix} 1 & 0 & & & \\ -1 & 1 & \ddots & & \\ 0 & -1 & \ddots & 0 & \\ & & \ddots & \ddots & 1 & 0 \\ & & & 0 & -1 & 1 \end{bmatrix} \ (37)$$

Les matrices $R(D_X)$ et $R(D_X)^T$ permettent d'obtenir, pour chaque voxel, un taux de variation selon l'axe X. Il s'agit d'opérateurs matriciels permettant d'obtenir, pour chaque terme de la carte de fluorescence, exprimée ici sous une forme vectorielle, une différence entre deux termes selon l'axe X. Plus précisément, à chaque terme de la carte de fluorescence est assigné une coordonnée selon l'axe X. Les matrices $R(D_X)$ et $R(D_X)^T$ permettent d'effectuer une différence entre deux termes de la carte de fluorescence adjacents selon l'axe X ou espacés d'un incrément selon l'axe X.

De même, les matrices $R(D_Y)$ et $R(D_Y)^T$ permettent d'obtenir, pour chaque voxel, un taux de variation selon l'axe Y. Il s'agit d'opérateur matriciels permettant d'obtenir, pour chaque terme de la carte de fluorescence, exprimée ici sous une forme vectorielle, une différence entre deux termes selon l'axe Y. A chaque terme de la carte de fluorescence est assigné une coordonnée selon l'axe Y. Les matrices $R(D_Y)$ et $R(D_Y)^T$ permettent d'effectuer une différence entre deux termes de la carte de fluorescence adjacents selon l'axe Y ou espacés d'un incrément selon l'axe Y.

De même, les matrices $R(D_Z)$ et $R(D_Z)^T$ permettent d'obtenir, pour chaque voxel, un taux de variation selon l'axe Z. Il s'agit d'opérateur matriciels permettant d'obtenir, pour chaque terme de la carte de fluorescence, exprimée ici sous une forme vectorielle, une différence entre deux termes selon l'axe Z. A chaque terme de la carte de fluorescence est assigné une coordonnée selon l'axe Z. Les matrices $R(D_Z)$ et $R(D_Z)^T$ permettent d'effectuer une différence entre deux termes de la carte de fluorescence adjacents selon l'axe Z ou espacés d'un incrément selon l'axe Z.

$$\text{On pose } R(D_X)^+ = \begin{bmatrix} 1 & 0 & & & \\ 0 & 1 & \ddots & & \\ & 0 & \ddots & 0 & \\ & & \ddots & 1 & 0 \\ & & & 0 & 1 \end{bmatrix} \ (38) \,,$$

$$R(D_X)^- = \begin{bmatrix} 0 & 1 & & & \\ 0 & 0 & \ddots & & \\ & 0 & \ddots & 1 & \\ & & \ddots & 0 & 1 \\ & & & 0 & 0 \end{bmatrix} \ (39),$$

$$R(D_X)^{T+} = \begin{bmatrix} 1 & 0 & & & \\ 0 & 1 & \ddots & & \\ & 0 & \ddots & 0 & \\ & & \ddots & 1 & 0 \\ & & & 0 & 1 \end{bmatrix} \quad (40),$$

$$R(D_X)^{T-} = \begin{bmatrix} 0 & 0 & & & \\ 1 & 0 & \ddots & & \\ & 1 & \ddots & 0 & \\ & & \ddots & 0 & 0 \\ & & & 1 & 0 \end{bmatrix} \quad (41)$$

$R(D_X)^+$ et $R(D_X)^{T+}$ comprennent les termes positifs de $R(D_X)$ et $R(D_X)^T$ respectivement.

$R(D_X)^-$ et $R(D_X)^{T-}$ comprennent les opposés des termes négatifs de $R(D_X)$ et $R(D_X)^T$ respectivement.

On a:

$$R(D_X) = R(D_X)^+ - R(D_X)^-$$

De même ; on peut définir :

$R(D_Y)^+$ et $R(D_Y)^{T+}$, qui comprennent les termes positifs de $R(D_Y)$ et $R(D_Y)^T$ respectivement

$R(D_Y)^-$ et $R(D_Y)^{T-}$, qui comprennent les opposés des termes négatifs de $R(D_Y)$ et $R(D_Y)^T$ respectivement ;

Et

$$R(D_Y) = R(D_Y)^+ - R(D_Y)^-$$

$R(D_Z)^+$ et $R(D_Z)^{T+}$, qui comprennent les termes positifs de $R(D_Z)$ et $R(D_Z)^T$ respectivement ;

$R(D_Z)^-$ et $R(D_Z)^{T-}$, qui comprennent les opposés des termes négatifs de $R(D_Z)$ et $R(D_Z)^T$ respectivement ;

$$R(D_Z) = R(D_Z)^+ - R(D_Z)^-$$

D'après (33),

$$Q_X = R^T(D_X)\,\Gamma R(D_X) \quad (42)$$

$$Q_X = (R(D_X)^{T+} - R(D_X)^{T-})\,\Gamma(R(D_X)^+ - (RD_X)^-) \quad (43)$$

$$Q_X = R(D_X)^{T+}\Gamma R(D_X)^+ + R(D_X)^{T-}\Gamma R(D_X)^- - R(D_X)^{T+}\Gamma R(D_X)^- - R(D_X)^{T-}\Gamma R(D_X)^+ \quad (44)$$

On pose :

$$Q_X{}^+ = R(D_X)^{T+}\Gamma R(D_X)^+ + R(D_X)^{T-}\Gamma R(D_X)^- \quad (45)$$

$Q_X{}^+$ est une matrice symétrique d'éléments positifs.

$$Q_X{}^- = R(D_X)^{T+}\Gamma R(D_X)^- + R(D_X)^{T-}\Gamma R(D_X)^+ \quad (46)$$

$Q_X{}^-$ est une matrice symétrique d'éléments positifs.

$$Q_X = Q_X{}^+ - Q_X{}^- \quad (47)$$

De même, on pose :

$$Q_Y{}^+ = R(D_Y)^{T+}\Gamma R(D_Y)^+ + R(D_Y)^{T-}\Gamma R(D_Y)^- \quad (50)$$

$$Q_Y{}^- = R(D_Y)^{T+}\Gamma R(D_Y)^- + R(D_Y)^{T-}\Gamma R(D_Y)^+ \quad (51)$$

$Q_Y{}^+$ et $Q_Y{}^-$ sont des matrices symétriques d'éléments positifs.

$$Q_Y = Q_Y{}^+ - Q_Y{}^- \quad (52)$$

$$Q_Z{}^+ = R(D_Z)^{T+}\Gamma R(D_Z)^+ + R(D_Z)^{T-}\Gamma R(D_Z)^- \quad (53)$$

$$Q_Z{}^- = R(D_Z)^{T+}\Gamma R(D_Z)^- + R(D_Z)^{T-}\Gamma R(D_Z)^+ \quad (54)$$

$$Q_Z = Q_Z{}^+ - Q_Z{}^- \quad (55)$$

$Q_Z{}^+$ et $Q_Z{}^-$ sont des matrices symétriques d'éléments positifs.
Selon (31) à (35)

$$Q = Q_D{}^+ - Q_D{}^- + Q_X{}^+ - Q_X{}^- + Q_Y{}^+ - Q_Y{}^- + Q_Z{}^+ - Q_Z{}^- \quad (56)$$

Sachant que $Q_D{}^- = 0$.
$Q$ est une matrice SSPD.
Soit

$$Q^+ = Q_D{}^+ + \lambda \left(Q_X{}^+ + Q_Y{}^+ + Q_Z{}^+\right) \quad (57)$$

$$\text{Et } Q^- = \lambda\left(Q_X{}^- + Q_Y{}^- + Q_Z{}^-\right) \quad (58)$$

$Q^+$ et $Q^-$ sont des matrices symétriques d'éléments positifs.
D'après (30),

$$\varepsilon(f) = \varepsilon_D(f) + \lambda\varepsilon_R(f) = \frac{1}{2}f^T Qf + c^T f \quad (59)$$

On retrouve un formalisme exprimé en lien avec l'expression (11). Comme indiqué dans (15), selon ce formalisme le vecteur $f$ est mis à jour selon l'expression :

$$f^k \leftarrow f^{k-1} \odot \frac{Q^- f^{k-1} + c^-}{Q^+ f^{k-1} + c^+} \quad (60),$$

sachant que

$$c = c^- \quad (61)$$

Ainsi,

$$f^k \leftarrow f^{k-1} \odot \frac{Q^- f^{k-1} + c}{Q^+ f^{k-1}} \quad (62)$$

L'expression (61) peut être formulée selon :

$$F^k \leftarrow F^{k-1} \odot \frac{Q^-(F^{k-1}) + P_R * M}{Q^+(F^{k-1})} \quad (63)$$

avec

$$Q^-(F^{k-1}) = \lambda(D_X^{R+} * (\Gamma' \odot D_X^- * F^{k-1}) + D_X^{R-} * (\Gamma' \odot D_X^+ * F^{k-1})) + \lambda(D_Y^{R+} * (\Gamma' \odot$$
$$D_Y^- * F^{k-1}) + D_Y^{R-} * (\Gamma' \odot D_Y^+ * F^{k-1}) + \lambda(D_Z^{R+} * (\Gamma' \odot D_Z^- * F^{k-1}) + D_Z^{R-} * (\Gamma' \odot$$
$$D_Z^+ * F^{k-1})) \quad (64)$$

$$Q^+(F^{k-1}) = P_R * P * F^{k-1} + \lambda(D_X^{R+} * (\Gamma' \odot D_X^+ * F^{k-1}) + D_X^{R-} * (\Gamma' \odot D_X^- * F^{k-1})) +$$
$$\lambda(D_Y^{R+} * (\Gamma' \odot D_Y^+ * F^{k-1}) + D_Y^{R-} * (\Gamma' \odot D_Y^- * F^{k-1})) + \lambda(D_Z^{R+} * (\Gamma' \odot D_Z^+ *$$
$$F^{k-1}) + D_Z^{R+} * (\Gamma' \odot D_Z^+ * F^{k-1})) \quad (65)$$

$\Gamma'$ comporte les termes de la diagonale de la matrice $\Gamma$ spatialisés de façon qu'à chaque coordonnée $r_n$, $\Gamma'(r_n) = 1/|G(F^{k-1}(r_n))|_2$.

$Q^-(F^{k-1})$ et $Q^+(F^{k-1})$ sont des opérateurs appliqués à la carte de fluorescence $F^{k-1}$, respectivement définis par (64) et (65).

L'expression (63) correspond à une formule de mise à jour de la carte de fluorescence $F$ entre deux itérations successives $F^{k-1}$ et $F^k$. En utilisant une notation plus générale, faisant intervenir le modèle adjoint $H'$ du modèle direct, appliqué aux mesures,

$$F^k \leftarrow F^{k-1} \odot \frac{Q^-(F^{k-1}) + H'(M)}{Q^+(F^{k-1})} \quad (66)$$

et

$$Q^+(F^{k-1}) = H'(H(F^{k-1})) + \lambda(D_X^{R+} * (\Gamma' \odot D_X^+ * F^{k-1}) + D_X^{R-} * (\Gamma' \odot D_X^- * F^{k-1})) +$$
$$\lambda(D_Y^{R+} * (\Gamma' \odot D_Y^+ * F^{k-1}) + D_Y^{R-} * (\Gamma' \odot D_Y^- * F^{k-1})) + \lambda(D_Z^{R+} * (\Gamma' \odot D_Z^+ *$$
$$F^{k-1}) + D_Z^{R+} * (\Gamma' \odot D_Z^+ * F^{k-1})) \quad (67)$$

Dans cet exemple, $H'(M) = P_R * P$ (68) et $H'(P * F^{k-1}) = P_R * P * F^{k-1}$ (69)

La notation $D_X^{R+}$ signifie $D_X^+$ retourné, c'est-à-dire après application d'une transformation, par symétrie centrale, de la matrice $D_X^+$.

En observant l'effet des matrices (38) à (41), on voit que :

- La convolution de F par $D_\Delta^+$ laisse inchangé $F$.
- La convolution de F par $D_\Delta^{R+}$ laisse inchangé $F$.
- La convolution de F par $D_\Delta^-$ décale F dans le sens $\Delta$ négatif, de préférence d'une unité.
- La convolution de F par $D_\Delta^{R-}$ décale F dans le sens $\Delta$ positif, de préférence d'une unité

Dans le cas d'une carte de fluorescence en 3 dimensions, $\Delta$ est successivement égal à X, Y et Z.

Au final on calcule de façon très simple

$$Q^+\left(F^{k-1}\right) = (P_R * P) * F^{k-1} + \lambda\left[3\Gamma' \odot F^{k-1} + S_{x\to}[\Gamma' \odot S_{\leftarrow x}F^{k-1}] + S_{y\to}[\Gamma' \odot\right.$$

$$\left.S_{\leftarrow y}F^{k-1}] + S_{z\to}[\Gamma' \odot S_{\leftarrow z}F^{k-1}]\right] = H'(H\left(F^{k-1}\right)) + \lambda\left[3\Gamma' \odot F^{k-1} + S_{x\to}[\Gamma' \odot S_{\leftarrow x}F^{k-1}] +\right.$$

$$\left. S_{y\to}[\Gamma' \odot S_{\leftarrow y}F^{k-1}] + S_{z\to}[\Gamma' \odot S_{\leftarrow z}F^{k-1}]\right] \quad (70)$$

$$Q^-\left(F^{k-1}\right) = \lambda\left[\Gamma' \odot (S_{\leftarrow x}F^{k-1} + S_{\leftarrow y}F^{k-1} + S_{\leftarrow z}F^{k-1}) + S_{x\to}[\Gamma' \odot F^{k-1}] + S_{y\to}[\Gamma' \odot\right.$$

$$\left. F^{k-1}] + S_{z\to}[\Gamma' \odot F^{k-1}]\right] (71)$$

$S_{x\to}$ est un opérateur de décalage dans le sens des x croissants (idem pour $S_{y\to}$ : décalage vers y croissants et $S_{z\to}$ : décalage vers z croissants).

$S_{\leftarrow x}$ est un opérateur de décalage dans le sens des x croissants (idem pour $S_{\leftarrow y}$ : décalage vers y décroissants et $S_{\leftarrow z}$ : décalage vers z décroissants).

Quel que soit l'axe choisi, et quel que soit le sens, le décalage est effectué selon un nombre d'unités égal à 1 ou proche de 1, par exemple entre 1 et 10 ou de préférence entre 1 et 5.

Les expressions (70) et (71) peuvent s'écrire :

$$Q^+\left(F^{k-1}\right) = H'(H\left(F^{k-1}\right)) + \lambda\left[n\Gamma' \odot F^{k-1} + \sum_\Delta S_{\Delta\to}[\Gamma' \odot S_{\leftarrow\Delta}F^{k-1}]\right] \quad (72)$$

$$Q^-\left(F^{k-1}\right) = \lambda[\Gamma' \odot \sum_\Delta S_{\leftarrow\Delta}F^{k-1} + \sum_\Delta S_{\Delta\to}[\Gamma' \odot F^{k-1}]] \quad (73)$$

Où $\Delta$ correspond à chaque axe du repère considéré. On peut prendre en compte un ou plusieurs axes, le plus généralement deux (distribution spatiale bidimensionnelle) ou trois axes (distribution spatiale 3D). Dans (71), n correspond au nombre d'axes considérés.

Un avantage de la mise à jour selon les expressions de mise à jour (62) ou (63) ou (66) est qu'elle sont simples à mettre en œuvre, d'un point de vue mémoire. En effet, la mise à jour s'obtient par des décalages de la carte de fluorescence $F^{k-1}$, selon les trois directions X, Y et Z.

Une particularité de l'invention est que la prise en compte de la composante de régularisation entraîne, lors de la mise à jour un décalage successif de la carte de fluorescence selon les trois axes du repère, vers les sens positifs ou négatifs. Il s'agit d'opérations peu couteuses en matière de puissance de calcul.

Par exemple, le calcul de $S_{x\to}[\Gamma' \odot S_{\leftarrow x}F^{k-1}]$ est un calcul simple, obtenu par :

- décalage de l'ensemble des termes de $F^{k-1}$, associés à une coordonnée (x, y, z) d'un rang vers les x négatifs : on obtient la carte de fluorescence décalée $S_{\leftarrow x}F^{k-1}$
- multiplication, terme à terme, de chaque terme de $S_{\leftarrow x}F^{k-1}$ par $\Gamma'$ ;
- décalage l'ensemble des termes de $[\Gamma' \odot S_{\leftarrow x}F^{k-1}]$, associés à une coordonnée (x, y, z) d'un rang vers les x positifs

Ainsi, la mise à jour est effectuée :

- en calculant $Q_D^+$, à partir de l'opérateur du modèle direct et de l'opérateur adjoint du modèle direct, avec $Q_D^+ = P_R * P$, sachant que cette grandeur est identique pour toutes les itérations ;
- en calculant $c^- = -c = P_R * M$, à partir de l'opérateur adjoint, sachant que cette grandeur est identique pour toutes les itérations ;
- et, lors de chaque itération, en calculant $Q^-(F^{k-1})$ et $Q^+(F^{k-1})$ liées à la régularisation, sachant que ces composantes s'obtiennent, sans nécessiter une grande puissance de calcul, par des décalages successifs de la carte de fluorescence $F^{k-1}$ selon les trois axes X, Y et Z, généralement d'un incrément, soit dans le sens positif, soit dans le sens négatif.

Le formalisme décrit en lien avec les expressions (61) à (73) permet de déterminer, de façon itérative, la carte de fluorescence en utilisant une formule de mise à jour simple à mettre en œuvre et peu coûteuse en ressource, comme vu précédemment.

La figure 4 montre les principales étapes de mise en œuvre d'un procédé selon l'invention, dans un exemple correspondant à une reconstruction d'une carte de fluorescence (distribution spatiale de fluorescence) d'un objet.

Etape 100 : illumination de l'objet.

Au cours de l'étape 100, l'objet 10 est illuminé par la source de lumière 11 dans une bande spectrale d'illumination. Dans l'exemple décrit, la bande spectrale d'illumination est une bande spectrale d'excitation d'un fluorophore potentiellement présent dans l'objet.

L'objet peut être interposé entre la source de lumière 11 et le capteur d'images 15, ce qui correspond à une configuration d'acquisition usuellement désignée par le terme « en transmission ». De façon alternative, l'acquisition peut être effectuée en réflexion, ou rétrodiffusion, la source de lumière 11 et le capteur d'image 15 étant disposés face à l'objet.

Etape 110 : Acquisition d'images de l'objet

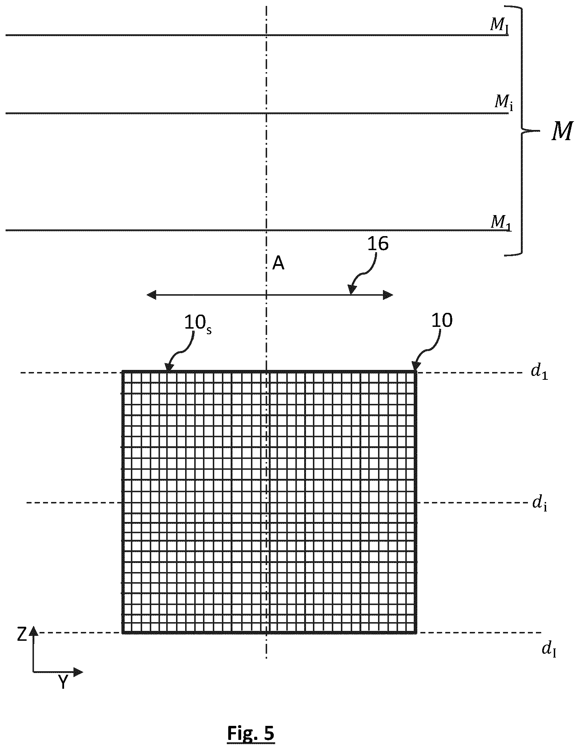

Au cours de cette étape, on acquiert une ou plusieurs images élémentaires $M_1....M_i...M_l$ de l'objet, en différentes profondeurs. La figure 5 schématise une configuration d'acquisition selon laquelle le plan focal du capteur d'image est successivement déplacé en différentes profondeurs dans l'objet, ce qui correspond à un mode de réalisation préféré. La source de lumière reste fixe. Le capteur d'image acquiert autant d'images que de distances focales, chaque distance focale étant associée à une profondeur di dans l'objet. On obtient ainsi des images élémentaires $M_1....M_i...M_l$, $l$ correspondant au nombre d'images élémentaires. Les images élémentaires $M_1....M_i...M_l$ sont respectivement associées aux profondeurs $d_1....d_i...d_l$. Dans la suite, les images élémentaires sont combinées pour former une image acquise notée $M$ : il s'agit d'une image tridimensionnelle de l'objet. L'image acquise est discrétisée en voxels, dits voxels image $M(r')$, chaque voxel image étant un pixel d'une image élémentaire $M_n$ formant l'image acquise M.

De façon alternative, le capteur d'image a une distance focale fixe et il est déplacé par rapport à l'objet, de façon que le plan focal soit successivement déplacé en différentes profondeurs $d_1....d_i...d_l$ dans l'objet.

De façon alternative, le capteur d'image reste fixe et on utilise une source de lumière émettant la lumière selon une lame étroite de lumière. La source de lumière est ensuite translatée par rapport à l'objet, de préférence parallèlement à l'axe optique. Ainsi, au cours de chaque illumination, on éclaire une couche de l'objet parallèle au plan focal du capteur d'image, dont l'épaisseur est inférieure à l'écart entre deux profondeurs successives $d_i$, $d_{i\_1}$. Le capteur acquiert une image en chaque position de la source de lumière. On forme ainsi successivement différentes images correspondant respectivement à différentes profondeurs de l'objet.

D'une façon générale, l'étape 110 vise à obtenir différentes images $M_1....M_i...M_l$ représentatives de différentes profondeurs de l'objet $d_1....d_i...d_l$. Le fait d'acquérir des images en disposant de plans focaux à différentes profondeurs permet d'obtenir des images dans lesquels les sources fluorescentes, dans l'objet, apparaissent de façon plus nettes. Cela permet d'obtenir une reconstruction plus précise. Les mesures correspond à un modèle direct appliqué à la carte de fluorescence.

Les étapes qui suivent sont mises en œuvre par l'unité de traitement 20. Cette dernière comporte un microprocesseur relié à une mémoire. La mémoire comporte des instructions permettant la mise en œuvre du traitement décrit par la suite. La mémoire de l'unité de traitement comporte les images $M_1....M_i...M_l$ acquises lors de l'étape 110.

Etape 120 : Initialisation

Au cours de cette étape, la distribution spatiale de fluorescence dans l'objet est initialisée. Chaque terme $F(r)$ prend une valeur initiale $F^0(r)$ déterminée aléatoirement ou prédéfinie. De préférence, l'initialisation est effectuée de telle sorte que $F^0 = P_R * M$ : il s'agit de l'application de l'opérateur adjoint du modèle direct, aux mesures. De façon plus générale, $F^0 = H'(M)$.

Etape 130 : formation du vecteur $f^0$. Au cours de cette étape, chaque terme de $F^0(r)$ forme un vecteur $f^0$.

Etape 140 : formation des matrices $Q^+$, $Q^-$, et des vecteurs $c^+$ et $c^-$ : ces matrices et vecteurs forment des données d'entrée de l'algorithme. Ils sont déterminés en fonction de la PSF, des mesures M du capteur et de la norme du gradient spatial prise en compte dans le terme de régularisation.

Etape 150 : mise à jour du vecteur $f^k$ en fonction du vecteur $f^1$ résultant d'une itération précédente où, lors de la première itération, de l'initialisation (étape 130). La formule de mise à jour est :

$$f^k \leftarrow f^{k-1} \odot \frac{Q^- f^{k-1} - c}{Q^+ f^{k-1}} \quad (62)$$

L'expression (62) correspond à une prise en compte d'une carte de fluorescence formant un vecteur.

La phase de vectorisation (étape 130) est optionnelle. La carte de fluorescence peut être exprimée sous la forme d'une matrice, 2D ou 3D, la formule de mise à jour étant :

$$F^k \leftarrow F^{k-1} \odot \frac{Q^-(F^{k-1}) + P_R * M}{Q^+(F^{k-1})} \quad (63)$$

De façon plus générale, la formule de mise à jour est (66).

Etape 160 : réitération de l'étape 150 jusqu'à l'atteinte d'un critère d'arrêt d'itérations. Le critère d'arrêt des itérations est un nombre d'itérations prédéterminé ou une comparaison entre deux vecteurs $f^k$ et $f^1$ résultant de deux itérations successives (ou entre deux cartes de fluorescence $F^k$ et $F^{k-1}$ successives).

On a mis en œuvre l'invention pour reconstruire une carte de fluorescence d'un embryon de souris au stade blastocyte. Le noyau de chaque cellule était marqué par fluorescence (marqueur : Draq5 -marque déposée) excité à 625 nm. On a effectué une acquisition de 50 plans image distants de 2 $\mu$m les uns des autres. Le diamètre de l'embryon était de 90 $\mu$m. La taille de chaque pixel, ramené à l'espace objet, était de 108 nm.

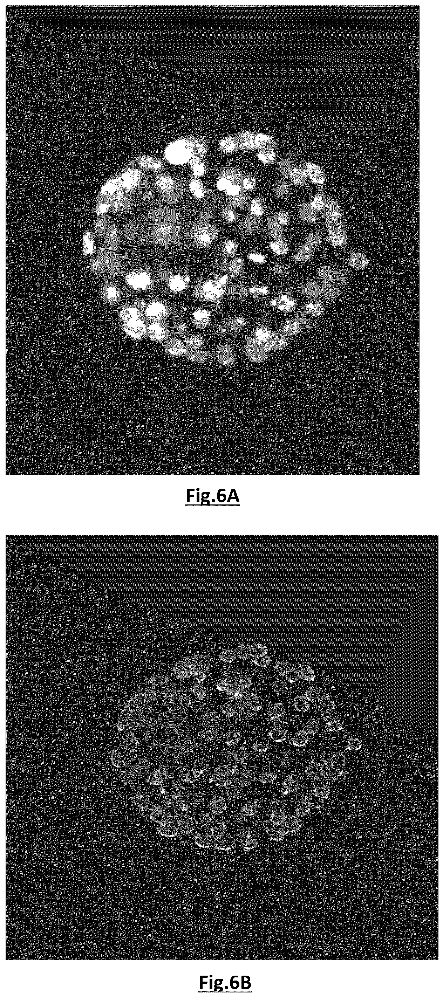

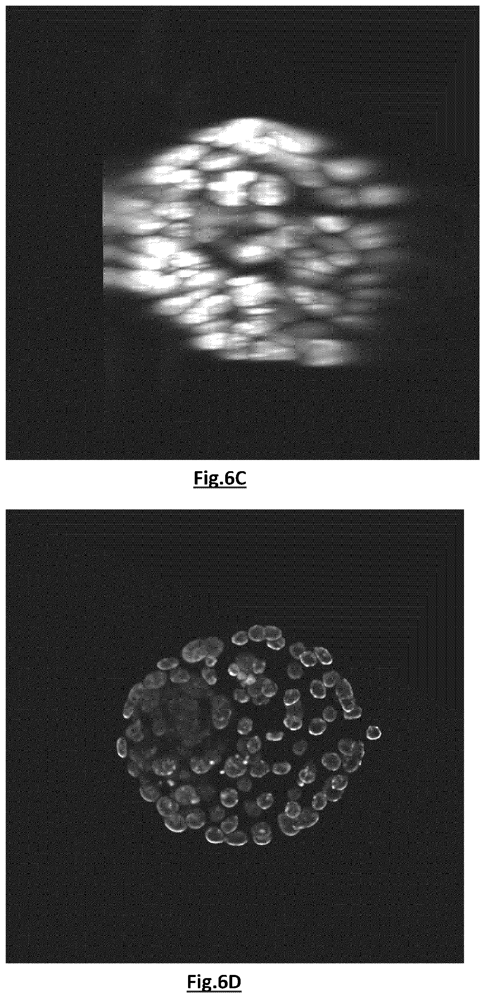

La carte de fluorescence de l'échantillon a été reconstruite successivement sans et avec mise en œuvre de la régularisation. Les figures 6A et 6C représentent des vues selon le plan XY (parallèlement au plan du capteur d'image) et XZ (perpendiculairement au plan du capteur d'image), sans mettre en œuvre la régularisation. La formule de mise à jour est telle qu'explicitée dans (16). Les figures 6B et 6D représentent des vues selon le plan XY (parallèlement au plan du capteur d'image) et XZ (perpendiculairement au plan du capteur d'image), avec mise en œuvre de la régularisation. On observe que la régularisation permet d'obtenir une reconstruction plus représentative de la réalité.

On a décrit ci-dessus un exemple de reconstruction d'une distribution spatiale de fluorescence : la caractéristique de l'objet est une intensité émission d'une lumière de fluorescence.

L'invention peut cependant s'appliquer à d'autres reconstructions de distributions spatiales. Il peut par exemple s'agir d'une reconstruction de l'atténuation d'un objet à un rayonnement ionisant, dans une plage d'énergie déterminée, lorsque des mesures par tomographie X sont réalisées autour de l'objet. Dans ce cas, le modèle direct met en œuvre une transformée de Radon, qui est également un opérateur linéaire appliqué aux inconnues à rechercher, c'est-à-dire une absorbance de voxels de l'échantillon. Dans ce cas, la carte F à reconstituer est la carte d'absorbance dans différents voxels de l'échantillon. Les mesures M correspondent à l'intégrale des absorbances suivant les trajectoires linéaires entre une source de rayons X et les pixels du détecteur. Les mesures peuvent être estimées selon un modèle de prédiction linéaire, formant le modèle direct : $\hat{M} = \mathcal{R}\,(F)$ où $\mathcal{R}$ est une transformée de Radon. L'erreur d'attache aux données est calculée en utilisant l'opérateur adjoint de la transformée de Radon $\mathcal{R}'\,(M)$, appliqué aux mesures.

L'invention peut également s'appliquer à une estimation de l'absorption optique d'un objet, une différence, par rapport à la modalité de fluorescence, étant que la longueur d'onde d'émission de la source de lumière correspond à la longueur d'onde des photons détectés par le capteur d'image. La caractéristique est alors une absorption optique en différentes coordonnées de l'objet.

La caractéristique peut être une partie d'une image, l'objectif étant de reconstruire une image nette à partir d'une image floutée.

Ainsi, la caractéristique est une caractéristique optique d'un objet, ou une caractéristique d'atténuation ou de réflexion ou de rétrodiffusion ou d'atténuation d'une onde, dans l'objet. Il peut s'agir d'une onde électromagnétique (onde lumineuse, rayon X ou gamma) ou onde acoustique, les applications visées étant l'échographie. Plus généralement, la caractéristique peut être une réponse de l'objet à une onde auquel il est exposé.

L'invention peut également s'appliquer à une opération de déconvolution d'une image, par exemple l'application d'un filtre dont la PSF est connue.

Dans tous les cas, lors de chaque itération, la prise en compte de la régularisation se traduit par une combinaison de termes, chaque terme correspondant à un décalage de la distribution spatiale selon au moins un axe du repère dans lequel les coordonnées de l'objet sont définies.

**Revendications**

1. Procédé de reconstruction d'une distribution spatiale d'une caractéristique ($F$) dans un objet, l'objet étant discrétisé selon différentes coordonnées spatiales ($r_n$) définies dans un repère, le repère étant défini selon au moins un axe (X,Y,Z), le procédé comportant :

   a) acquisition de mesures ($M$) par un capteur (15) disposé face à l'objet, chaque mesure pouvant être estimée par un opérateur $(H(F), P * F, \mathcal{R}\,(F))$ linéaire, appliqué à la distribution spatiale de la caractéristique ($F$), formant un modèle direct ;

   b) à l'aide d'une unité de traitement (20), reconstruction de la distribution spatiale de la caractéristique de l'objet, en chaque coordonnée spatiale, par minimisation itérative d'une erreur, à chaque itération étant assigné un rang ($k$), chaque itération comportant une mise à jour de la distribution spatiale de la caractéristique de l'objet, la première itération étant mise en œuvre à partir d'une distribution spatiale initialisée ,

   le procédé étant **caractérisé en ce que** lors de l'étape b), l'erreur minimisée comporte :

- une composante d'attache aux données $(\varepsilon_D(f),\varepsilon_D(F))$ comportant un écart entre les mesures acquises et les mesures estimées par le modèle direct ;
- une composante de régularisation $(\varepsilon_R(f),\varepsilon_R(F))$, comportant une somme d'une norme d'un gradient spatial de la caractéristique, déterminé en différentes coordonnées dans l'objet ;

et **en ce que** chaque itération comporte une mise à jour d'une distribution spatiale antérieure, $(F^{k-1},f^{k-1})$ correspondant soit à la distribution spatiale initiale $(F^0,f^0)$ soit à une distribution spatiale résultant d'une itération précédente, la mise à jour comportant un produit pour chaque coordonnée spatiale, de

- la distribution spatiale antérieure $(F^{k-1},f^{k-1})$;
- l'opérateur adjoint du modèle direct appliqué aux mesures $(H'(M),P_R{}^*M, \mathcal{R}'(M))$;
- pour au moins un axe du repère, un produit, terme à terme :

  • de ladite distribution spatiale antérieure $(F^{k-1}, f^{k-1})$ translatée, selon l'axe du repère, d'au moins une unité, selon un sens croissant ;
  • de ladite distribution spatiale antérieure $(F^{k-1}, f^{k-1})$ translatée, selon l'axe du repère, d'au moins une unité, selon un sens décroissant.

2. Procédé selon la revendication 1, dans lequel la mise à jour comporte, en chaque coordonnée spatiale, une multiplication de la distribution spatiale antérieure par une combinaison linéaire de produits, chaque produit étant associé à un axe du repère (X,Y,Z), et comportant une multiplication terme à terme :

   • de ladite distribution spatiale antérieure translatée, selon l'axe du repère, d'au moins une unité, selon un sens croissant ;
   • de ladite distribution spatiale antérieure translatée, selon l'axe du repère, d'au moins une unité, selon un sens décroissant.

3. Procédé selon la revendication 1 ou la revendication 2, dans lequel chaque multiplication terme à terme comporte l'inverse d'une norme du gradient spatial $(1/|G(F_{k-1}(r)|_2)$ de la distribution antérieure pour ladite coordonnée.

4. Procédé selon l'une quelconque des revendications précédentes, dans lequel la mise à jour comporte

$$F^{k-1} \odot \frac{Q^-(F^{k-1})+H'(M)}{Q^+(F^{k-1})}$$

où :

- $F^{k-1}$ est la distribution spatiale antérieure ;
- $\odot$ désigne le produit de Hadamard ;

$$Q^+(F^{k-1}) = H'(H(F^{k-1})) + \lambda\big[n\Gamma' \odot F^{k-1} + \sum_\Delta S_{\Delta\to}[\Gamma' \odot S_{\leftarrow\Delta}F^{k-1}]\;\big];$$

$$Q^-(F^{k-1}) = \lambda[\Gamma' \odot \sum_\Delta S_{\leftarrow\Delta}F^{k-1} + \sum_\Delta S_{\Delta\to}[\Gamma' \odot F^{k-1}]];$$

- $M$ correspond aux mesures effectuées ;
- $\Gamma'$ est une distribution spatiale de l'inverse d'une norme d'un gradient spatial de la distribution spatiale antérieure, en chaque coordonnée de l'objet ;
- $\Delta$ correspond à chaque axe du repère ;
- $S_{\leftarrow\Delta}$ est un opérateur décalage d'une ou plusieurs unités selon l'axe $\Delta$, dans le sens décroissant ;
- $S_{\Delta\to}$ est un opérateur décalage d'une ou plusieurs unités selon l'axe $\Delta$, dans le sens croissant ;
- $n$ correspond au nombre d'axes considérés ;
- $\lambda$ est un réel positif ;
- $H$ est l'opérateur du modèle direct ;
- $H'$ est l'opérateur adjoint du modèle direct.

**5.** Procédé selon l'une quelconque des revendications précédentes, dans lequel l'étape a) comporte une formation d'au moins une image de l'objet, chaque image formant une distribution spatiale de mesures acquises par le capteur.

**6.** Procédé selon la revendication 5, dans lequel

- le capteur est un capteur d'image, configuré pour former une image de l'objet à une longueur d'onde d'émission ;
- l'objet est susceptible de comporter un fluorophore, émettant une lumière, à la longueur d'onde d'émission, sous l'effet d'une illumination à une longueur d'onde d'excitation ;
- dans l'étape a), au moins une image de l'objet est acquise lorsque l'objet est illuminé à la longueur d'onde d'excitation, différente de la longueur d'onde d'émission, chaque mesure étant représentative d'une quantité de lumière émise par le fluorophore en différentes coordonnées dans l'objet.

**7.** Procédé selon la revendication 5, dans lequel

- le capteur est un capteur d'image, configuré pour former une image de l'objet à une longueur d'onde d'émission ;
- l'objet est susceptible d'absorber une lumière, à la longueur d'onde d'émission,
- dans l'étape a), au moins une image de l'objet est acquise lorsque l'objet est illuminé à la longueur d'onde d'émission, chaque mesure étant représentative d'une quantité de lumière absorbée en différentes coordonnées dans l'objet.

**8.** Procédé selon la revendication 5, dans lequel

- le capteur est un capteur destiné à détecter un rayon ionisant, de type X ou gamma ;
- dans l'étape a), l'objet est irradié par un faisceau d'irradiation X ou gamma, chaque mesure étant représentative d'une absorption du faisceau par l'objet.

**9.** Procédé selon l'une quelconque des revendications précédentes, dans lequel la caractéristique est une caractéristique d'émission ou de réflexion ou de rétrodiffusion ou d'absorption d'une onde électromagnétique ou d'une onde acoustique.

**10.** Unité de traitement, configurée pour mettre en œuvre l'étape b) d'un procédé selon l'une quelconque des revendications précédentes à partir de mesures réalisées par un capteur disposé face à un objet, de façon à obtenir une distribution spatiale d'une caractéristique de l'objet.

**11.** Système de mesures, configuré pour reconstruire une distribution spatiale d'une caractéristique d'un objet, l'objet étant discrétisé selon différentes coordonnées spatiales associées à un repère,

- un capteur, disposé face à l'objet, et configuré pour acquérir des mesures, chaque mesure pouvant être estimée par chaque mesure pouvant être estimée un opérateur $(H(F), P * F, \mathcal{R}(F))$ linéaire, appliqué à la distribution spatiale de la caractéristique $(F)$, formant un modèle direct ;
- une unité de traitement, configurée pour mettre en œuvre l'étape b) d'un procédé selon l'une quelconque des revendications 1 à 9.

**Fig. 1**

**Fig. 2**

**Fig. 3**

**Fig. 4**

**Fig. 5**

**Fig.6A**

**Fig.6B**

**Fig.6C**

**Fig.6D**

Europäisches Patentamt

European Patent Office

Office européen des brevets

# RAPPORT DE RECHERCHE EUROPEENNE

Numéro de la demande

EP 25 16 2470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/074036 A1 (FUCHS THOMAS C [US] ET AL) 11 mars 2021 (2021-03-11) * abrégé * * alinéa [0056] - alinéa [0089] * * alinéa [0111] - alinéa [0222] * ----- | 1-11 | INV. G06T11/00 |
| A | MENG HUI ET AL: "Adaptive Gaussian Weighted Laplace Prior Regularization Enables Accurate Morphological Reconstruction in Fluorescence Molecular Tomography", IEEE TRANSACTIONS ON MEDICAL IMAGING, IEEE, USA, vol. 38, no. 12, 1 décembre 2019 (2019-12-01), pages 2726-2734, XP011758281, ISSN: 0278-0062, DOI: 10.1109/TMI.2019.2912222 [extrait le 2019-11-26] * abrégé * * Sections I et II * ----- | 1-11 | |
| A | EDUARDO X MIQUELES ET AL: "Iterative Reconstruction in X-ray Fluorescence Tomography Based on Radon Inversion", IEEE TRANSACTIONS ON MEDICAL IMAGING, IEEE, USA, vol. 30, no. 2, 1 février 2011 (2011-02-01), pages 438-450, XP011330320, ISSN: 0278-0062, DOI: 10.1109/TMI.2010.2085011 * abrégé * * Sections I-III * ----- | 1-11 | **DOMAINES TECHNIQUES RECHERCHES (IPC)** G06T |
| A | US 2020/151880 A1 (STAYMAN JOSEPH WEBSTER [US] ET AL) 14 mai 2020 (2020-05-14) * le document en entier * ----- -/-- | 1-11 | |

Le présent rapport a été établi pour toutes les revendications

| Lieu de la recherche | Date d'achèvement de la recherche | Examinateur |
|---|---|---|
| Munich | 16 septembre 2025 | Leclercq, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 25 16 2470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2013/094745 A1 (SUNDAR HARI [US]) 18 avril 2013 (2013-04-18) * le document en entier * ----- | 1-11 | |
| A | LU YUJIE ET AL: "Experimental Comparison of Continuous-Wave and Frequency-Domain Fluorescence Tomography in a Commercial Multi-Modal Scanner", IEEE TRANSACTIONS ON MEDICAL IMAGING, IEEE, USA, vol. 34, no. 6, 1 juin 2015 (2015-06-01), pages 1197-1211, XP011582646, ISSN: 0278-0062, DOI: 10.1109/TMI.2014.2375193 [extrait le 2015-05-29] * le document en entier * ----- | 1-11 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 16 septembre 2025 | Leclercq, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................

& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 25 16 2470

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-2025

| Document brevet cité au rapport de recherche | Date de publication | Membre(s) de la famille de brevet(s) | | Date de publication |
|---|---|---|---|---|
| US 2021074036 A1 | 11-03-2021 | AU | 2019238323 A1 | 15-10-2020 |
| | | CA | 3095109 A1 | 26-09-2019 |
| | | EP | 3769284 A1 | 27-01-2021 |
| | | US | 2021074036 A1 | 11-03-2021 |
| | | WO | 2019183584 A1 | 26-09-2019 |
| US 2020151880 A1 | 14-05-2020 | US | 2020151880 A1 | 14-05-2020 |
| | | WO | 2018223047 A1 | 06-12-2018 |
| US 2013094745 A1 | 18-04-2013 | JP | 5950782 B2 | 13-07-2016 |
| | | JP | 2013071016 A | 22-04-2013 |
| | | US | 2013094745 A1 | 18-04-2013 |

EPO FORM P0460

Pour tout renseignement concernant cette annexe : voir Journal Officiel de l'Office européen des brevets, No.12/82

# EP 4 641 505 A1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010103026 A
- US 2021074036 A

**Littérature non-brevet citée dans la description**

- **DAUBE-WITHERSPOON M**. An iterative image space reconstruction algorithm suitable for volume ect. *IEEE transactions on medical imaging*, 1986, vol. 5 (2), 61-66
- **D. SEUNG** ; **L. LEE**. Algorithms for non negative matrix factorization. *Advances in neural information processing systems*, 2001, vol. 13, 556-562
- Adaptive gaussian weighted Laplace prior regularization enables accurate morphological reconstruction in fluorescence molecular tomography. **HUI MENG et al.** IEEE transactions on medical imaging. IEEE, 12 January 2019, vol. 38
- Iterative reconstruction in X ray Fluorescence tomography based on radon inversion. **MIQUELES E. et al.** IEEE transactions on medical imaging. IEEE, 02 January 2011, vol. 30
- **VAN TOEY, J**. *Beam-Propagation method : analysis and assessment*